# EUROPEAN PATENT APPLICATION

(11) **EP 1 930 797 A2**
(43) Date of publication of application: **11.06.2008**
(21) Application number: 07014913.3
(22) Date of filing: 30.07.2007
(51) Int. Cl.: G05D 1/02

(54) **Apparatus for inducing automatic docking of robot**

(30) Priority: 07.12.2006 KR 20060123796
(71) Applicant: Samsung Gwangju Electronics Co., Ltd., Gwangju-city (KR)
(72) Inventor: Song, Jeong-gon, Gwangju-city (KR); Jeung, Sam-jong, Gwangju-city (KR); Kim, Myeong-cho, Gwangju-city (KR); Lee, Ju-sang, Gwangju-city (KR); Ko, Jang-youn, Gwangju-city (KR); Kim, Kyoung-woung c/o Samsung Gwangju Electr. Co., Ltd., Gwangju-city (KR); Lee, Hak-bong, Gwangju-city (KR)
(74) Representative: Käck, Jürgen

(57) **Abstract**

An apparatus (9) for inducing an automatic docking of a robot is disclosed. The apparatus (9) induces connecting terminals of the robot having a receiving unit to connect with docking terminals (20) disposed on one surface of a docking object (10), and includes a plurality of transmitting units (36) disposed on the same surface as that of the docking object (10) on which the docking terminals (20) are disposed. The plurality of transmitting units (36) is arranged in different angles to one another to transmit signals in different directions to one another, respectively.

## Description

### BACKGROUND OF THE INVENTION

### 1. Field of the Invention

The present disclosure relates generally to an apparatus for inducing an automatic docking of a robot. More particularly, the present disclosure relates to an automatic docking-inducing apparatus, which leads a robot traveling by itself to a docking position to accurately dock the robot with a docking object.

### 2. Description of the Related Art

Generally, a robot is widely used in industrial settings and homes. There is a need for the robot to search for a docking object by itself and dock with the docking object while working or after working. For instance, in the case of a robot cleaner used in the home, to charge a battery mounted therein with electricity, the robot cleaner docks with a charging apparatus installed at a certain place for a certain time period and charges the battery with electricity.

Docking-inducing apparatuses for the robot cleaner as described above are disclosed in Korean Patent Publication No. 2006-37008 and Korean Patent No. 645381, which are filed by the present applicant. However, a large number of researches are continuously being carried out to more widely extend the angle and range on which docking signals can have effect and to simplify constructions in aspects of assembling, maintenance and repair.

### SUMMARY OF THE INVENTION

An aspect of the present disclosure is to address at least the above problems and/or disadvantages and to provide at least the advantages described below. Accordingly, an aspect of the present disclosure is to provide an apparatus for inducing an automatic docking of a robot, which can cover a wide range, while having a simplified structure.

Another aspect of the present disclosure is to provide an apparatus for inducing an automatic docking of a robot, which can induce the robot to accurately dock with docking terminals of a docking object.

According to an aspect of an exemplary embodiment of the present disclosure, there is provided an apparatus for inducing an automatic docking of a robot, which induces connecting terminals of the robot having a receiving unit to connect with docking terminals disposed on one surface of a docking object, including a plurality of transmitting units disposed on the same surface as that of the docking object on which the docking terminals are disposed. The plurality of transmitting units is arranged in different angles to one another to transmit signals in different directions to one another, respectively. Accordingly, the apparatus can cover a wide angle, and thus induce an automatic docking of the robot, which approaches from various angles.

Here, a projecting part may be formed on the one surface of the docking object on which the docking terminals are disposed. In this case, the plurality of transmitting units may be disposed on the projecting part. Also, the projecting part may have a round surface or be formed in the form of a semi-oval sphere. Accordingly, a construction of the apparatus can be simplified and the apparatus can modularize the transmitting units to easily maintain and repair.

Also, the plurality of transmitting units may be disposed in the same height on the projection part, or at least a portion of the plurality of transmitting units may be disposed in a different height to one another or the rest on the projection part.

Here, preferably, but not necessarily, the plurality of transmitting units are disposed over the docking terminals. With this, the apparatus can induce the connecting terminals of the robot to more accurately dock with the docking terminals.

According to an embodiment of the present disclosure, each of the plurality of transmitting units may be formed of an infrared lamp, the docking object may be a charging device, and the docking terminals may be formed of charging terminals.

Also, the apparatus may further include a sensing tape disposed in a straight line on a bottom in front of the docking terminals.

### BRIEF DESCRIPTION OF THE DRAWING FIGURES

The above aspect and other features of the present disclosure will become more apparent by describing in detail exemplary embodiments thereof with reference to the attached drawings, wherein;
FIG. 1 is a perspective view exemplifying an apparatus for inducing an automatic docking of a robot according to an exemplary embodiment of the present disclosure;
FIG. 2 is a side elevation view of the automatic docking-inducing apparatus illustrated in FIG. 1;
FIG. 3 is a front view of the automatic docking-inducing apparatus illustrated in FIG. 1;
FIG. 4 is a top plan view of the automatic docking-inducing apparatus illustrated in FIG. 1;
FIG. 5 is a view exemplifying a process, which docks the robot by the automatic docking-inducing apparatus illustrated in FIG. 1; and
FIG. 6 is a perspective view exemplifying an apparatus for inducing an automatic docking of a robot according to another exemplary embodiment of the present disclosure.

Throughout the drawings, the same drawing reference numerals will be understood to refer to the same elements, features, and structures.

### DETAILED DESCRIPTION OF THE EXEMPLARY EMBODIMENTS

Hereinafter, an apparatus for inducing an automatic docking of a robot according to exemplary embodiments of the present disclosure will be described in detail with reference to the accompanying drawings. The robot as described above may be any one of various robots, such as a robot for cleaning, a robot for monitoring, a robot for conveying, etc., and the automatic docking-inducing apparatus may also be applied to various robots, such as a household robot, an industrial robot, etc. However, in the exemplary embodiments of the present disclosure, an automatic docking-inducing apparatus, which induces a household robot to automatically dock with a charging apparatus, will be explained as an example.

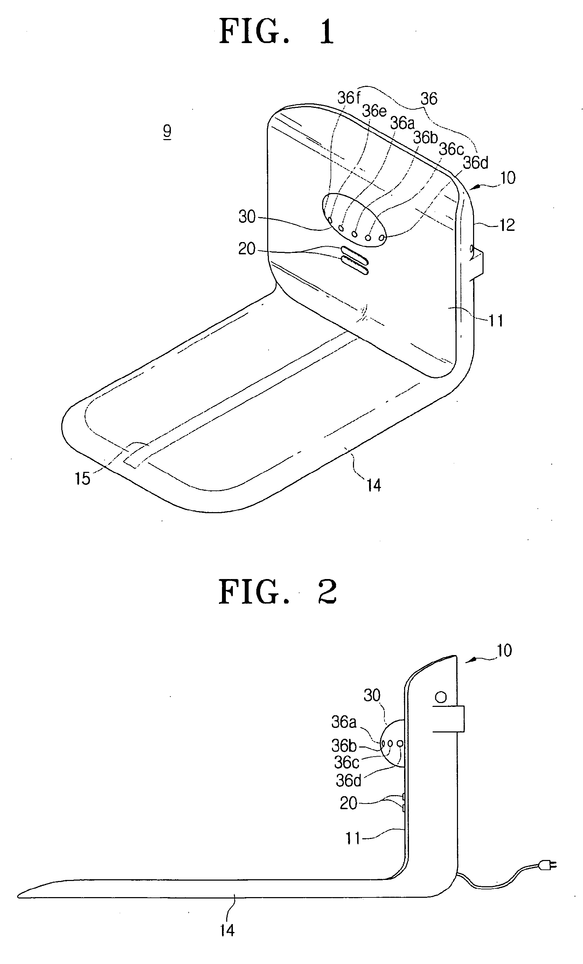

FIGS. 1, 2 and 3 show a perspective view, a side elevation view and a front view exemplifying an apparatus for inducing an automatic docking of a robot according to an exemplary embodiment of the present disclosure.

Referring to FIGS. 1 through 3, the automatic docking-inducing apparatus 9 according to the exemplary embodiment of the present disclosure includes a charging apparatus 10, which is a docking object, docking terminals 20, a projection part 30, and a transmitting unit 36.

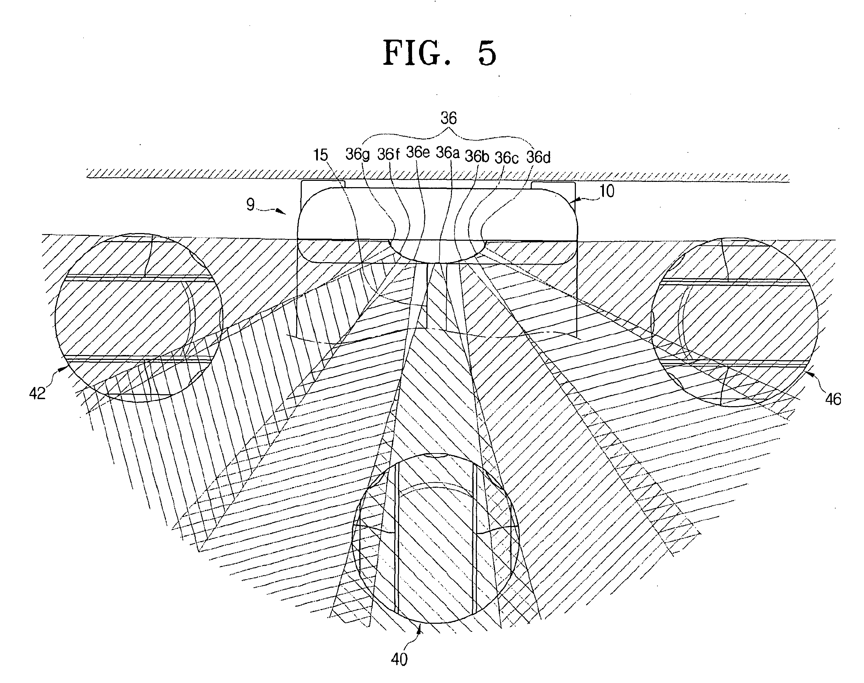

The charging apparatus 10 is provided with a power cord, which is connectable with a power source, and is made up of a charging mount 12 and a support 14. The charging mount 12 stands straight, and the support 14 is connected with a bottom of the charging mount 12 in front of the charging mount 12. The charging mount 12 is an apparatus, which enables a battery (not illustrated) of, for example, a robot 42 (see FIG. 5) to connect with the power source and thus to charge with electricity when the robot 42 is docked and electrically connected therewith. The support 14 functions to guide a movement of the robot 42. A sensing tape 15 is attached in a straight line on the support 14 in front the docking terminals 20, so that when the robot 42 arrives on the support 14, a bottom sensor (not illustrated) installed on an undersurface of the robot 42 can detect the sensing tape 15 thus to proceed the robot 42 centering on the sensing tape 15.

The docking terminals 20 are disposed in the same height as that of connecting terminals (not illustrated) of the robot 42 on a front surface of the charging mount 12, so that when the robot 42 approaches the charging mount 12, the robot 42 docks therewith. When the connecting terminals of the robot 42 are connected with the docking terminals 20, the battery mounted in the robot 42 is charged with electricity.

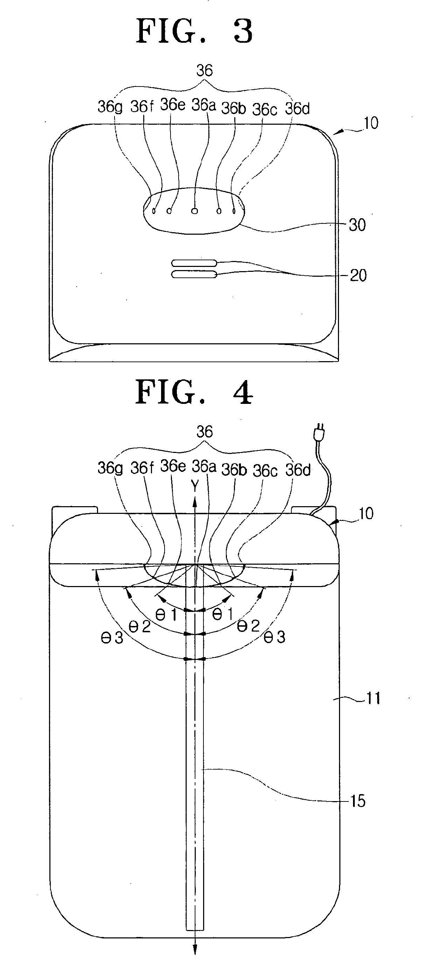

The projecting part 30 is disposed over the docking terminals 20 on the front surface of the charging mount 12. A surface of the projecting part 30 is rounded, so that it is projected in the form of an oval, more particularly, a semi-oval sphere. Accordingly, as illustrated in FIG. 3, since the projecting part 30 extends left and right as viewed from the front, the surface of the projecting part 30 secures a space, which can install the transmitting unit 36 in a horizontal direction. In the exemplary embodiment of the present disclosure, although the projecting part 30 is illustrated and explained as formed in the form of the oval, it can be formed in the form of a semi-sphere, a triangle, a quadrangle, or a polygon, besides the oval.

The transmitting unit 36 is made up of a plurality of, for example, a first through a seventh transmitting units 36a through 36g, and is disposed in the same height of the horizontal direction on the projecting part 30. Namely, as illustrated in the front view of FIG. 3, the plurality of transmitting units 36a, 36b, 36c, 36d, 36e, 36f and 36g are arranged in a row in a horizontally spaced-apart relation to one another. Accordingly, the transmitting units 36a, 36b, 36c, 36d, 36e, 36f and 36g are disposed in different angles to one another to transmit signals in different directions to one another, respectively. Also, the transmitting units 36a, 36b, 36c, 36d, 36e, 36f and 36g are made of infrared lamps having different signals to one another, respectively. Referring to FIG. 4, in the exemplary embodiment of the present disclosure, the transmitting unit 36 is made up of seven transmitting units. The first transmitting unit 36a, which is disposed on a Y-axis, that is, a center of the surface of the projecting part 30, has an angle of 0° (degrees) to the Y-axis, and transmits an infrared signal, which represents an angle of 0°. The second and the fifth transmitting unit 36b and 36e are disposed apart as much as an angle of θ1° from the first transmitting unit 36a or the Y-axis at the same height of the horizontal direction as that of the first transmitting unit 36a. Accordingly, the second and the fifth transmitting unit 36b and 36e emit infrared signals in directions inclined as much as the angle of θ1° left and right from the first transmitting unit 36a, and transmit infrared signals, which represent angles of +θ1° and -θ1°, respectively. The third and the sixth transmitting unit 36c and 36f are disposed apart as much as an angle of θ2° from the first transmitting unit 36a or the Y-axis, and emit infrared signals in directions inclined as much as the angle of θ2° left and right from the first transmitting unit 36a. Also, the third and the sixth transmitting unit 36c and 36f transmit infrared signals, which represent angles of +θ2° and -θ2°, respectively. The fourth and the seventh transmitting unit 36d and 36g are disposed apart as much as an angle of θ3° from the first transmitting unit 36a or the Y-axis, so that they emit infrared signals in directions inclined as much as the angle of θ3° left and right from the first transmitting unit 36a. The fourth and the seventh transmitting units 36d and 36g transmit infrared signals, which represent angles of +θ3° and -θ3°, respectively. As illustrated in FIG. 4, θ1 is smaller than θ2, and θ3 is larger than θ2. As described above, since the first through the seventh transmitting units 36a, 36b, 36c, 36d, 36e, 36f and 36g are disposed in the different angles to one another to transmit the signals in the different directions, respectively, they can cover more than 180° in front of the charging apparatus 10, as illustrated in FIG. 5. Thus, even though the robot or a robot cleaner 40, 42, or 46 approaches from any direction, it can receive any one or more of the infrared signals, which are transmitted from the transmitting unit 36. Also, since the robot 40, 42, or 46 receives any one or more of the infrared signals according to positions thereof, it can sense an angle which it forms to the docking terminals 20, search for a position where the angle thereof to the docking terminals 20 comes to 0, by itself, and dock with the charging apparatus 10, so that the connecting terminals installed in front thereof are connected with the docking terminals 20. In an exemplary embodiment of the present disclosure, although the transmitting units 36a, 36b, 36c, 36d, 36e, 36f and 36g are illustrated and explained as disposed, so that three pairs of transmitting units are disposed in the same interval, that is, symmetrically, centering on the first transmitting unit 36a, respectively, they can be non-symmetrically disposed instead of being symmetrically disposed. Namely, the transmitting units 36a, 36b, 36c, 36d, 36e, 36f and 36g are disposed, so that the second and the fifth transmitting units 36b and 36e have different angles to the Y-axis, respectively, the third and the sixth transmitting units 36c and 36f have different angles to the Y-axis, respectively, and the fourth and the seventh transmitting units 36d and 36g have different angles to the Y-axis, respectively. Also, the first transmitting unit 36a is not necessarily to be disposed on the Y-axis, and the number of the transmitting units can be also voluntary adjusted by one skilled in the art within a range, which do not matter to the robot in receiving signals. As described above, the plurality of transmitting units 36a, 36b, 36c, 36d, 36e, 36f and 36g, that is, the transmitting unit 36 is intensively disposed on the projecting part 30, so that the projecting part 30 on which the transmitting unit 36 is disposed can be modularized, thereby allowing the transmitting unit 36 to easily assemble in the charging apparatus 10 in fabrication and to easily separate therefrom in maintenance and repair. Also, a construction of the automatic docking-inducing apparatus 9 is simplified, and thereby fabrication costs are reduced.

Next, an operation, in which the robot 40, 42, or 46 is docked with the docking terminals 20 of the charging apparatus 10 by the automatic docking-inducing apparatus 9 will be explained in detail with reference to FIG. 5.

As illustrated in FIG. 5, the first through seventh transmitting units 36a, 36b, 36c, 36d, 36e, 36f and 36g transmit infrared signals, which correspond to positions thereof, respectively. Referring to FIG. 5, the robot 40, which is located in the middle, receives an infrared signal of 0° transmitted from the first transmitting unit 36a. Accordingly, the robot 40 decides as located in front of the docking terminals 20, and just proceeds forward to arrive on the support 14. When the robot 40 arrives on the support 14, it detects the sensing tape 15 attached on the support 14, and proceed forward centering on the sensing tape 15 to dock connecting terminals (not illustrated) of the robot 40 with the docking terminals 20. As in the robot 42, if the robot 42 approaches from a left side of the automatic docking-inducing apparatus 9, it receives an infrared signal of -θ3° from the seventh transmitting unit 36g, and gradually moves right while receiving infrared signals of -θ2° and -θ1° in turn. When the robot 42 finally receives an infrared signal of 0°, it proceeds forward and moves along the sensing tape 15 on the support 14 while detecting the sensing tape 15 so as to dock connecting terminals (not illustrated) of the robot 42 with the docking terminals 20. Also, as in the robot 46, if the robot 46 approaches from a right side of the automatic docking-inducing apparatus 9, it receives an infrared signal of +θ3° from the fourth transmitting unit 36d, and gradually moves left while receiving infrared signals of +θ2° and +θ1° in turn. After the robot 46 finally receives an infrared signal of 0°, it proceeds forward and moves along the sensing tape 15 on the support 14 to dock connecting terminals (not illustrated) of the robot 46 with the docking terminals 20.

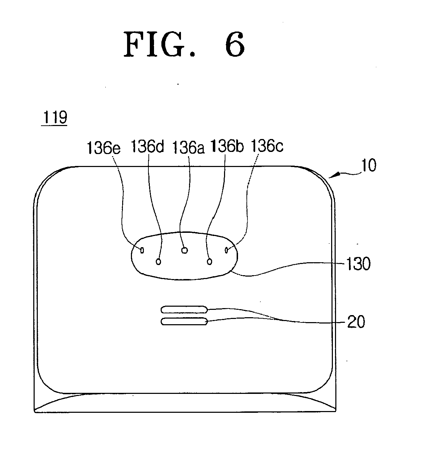

FIG. 6 is a perspective view exemplifying an apparatus 119 for inducing an automatic docking of a robot according to another exemplary embodiment of the present disclosure. The same elements as those of the automatic docking-inducing apparatus 9 as described above are represented as the same drawing reference numerals. The automatic docking-inducing apparatus 119 has the same constructions as those of the automatic docking-inducing apparatus 9 except that five transmitting units 136a, 136b, 136c, 136d and 136e are disposed on a projection part 130, and are arranged in different heights. All of the transmitting units 136a, 136b, 136c, 136d and 136e can be arranged in different heights, but in another exemplary embodiment of the present disclosure, only the second and the fourth transmitting units 136b and 136d are arranged in a height lower than the rest 136a, 136c and 136e of the transmitting units.

As apparent from the foregoing description, according to the exemplary embodiments of the present disclosure, the automatic docking inducing apparatus is advantageous in that it can cover the wide range, while having a simplified structure.

Further, the automatic docking inducing apparatus according to the present disclosure has a transmitting unit which is configured, so that the projecting part on which the plurality of transmitting units are disposed can be modularized, thereby allowing the transmitting units to easily be assembled, maintained and repaired and also allowing low priced automatic docking inducing apparatus to be provided.

Also, the automatic docking inducing apparatus according to the exemplary embodiments of the present disclosure is advantageous in that it can induce the robot to accurately dock with docking terminals of the docking object.

Although representative embodiments of the present disclosure have been shown and described in order to exemplify the principles of the present disclosure, the present disclosure is not limited to the specific exemplary embodiments. It will be understood that various modifications and changes can be made by one skilled in the art without departing from the scope of the invention as defined by the appended claims. Therefore, it shall be considered that such modifications, changes and equivalents thereof are all included within the scope of the present disclosure.

## Claims

1. An apparatus for inducing an automatic docking of a robot (40, 42, 46), the apparatus (9, 119) inducing connecting terminals of the robot (40, 42, 46) having a receiving unit to connect with a plurality of docking terminals (20) disposed on one surface of a docking object (10), comprising a plurality of transmitting units (36, 136a-e) disposed on the one surface, wherein the plurality of transmitting units (36, 136a-e) is arranged in different angles to one another to transmit signals in different directions to one another, respectively.

2. The apparatus of claim 1, further comprising a projecting part (30, 130) formed on the one surface, wherein the plurality of transmitting units (36, 136a-e) is disposed on the projecting part (30, 130).

3. The apparatus of claim 2, wherein a surface of the projecting part (30, 130) is rounded.

4. The apparatus of claim 2, wherein the projecting part (30, 130) is formed as a semi-oval sphere.

5. The apparatus of any of claims 1 - 4, wherein the plurality of transmitting units (36, 136a-e) are disposed to cover an angle of at least 180° on a plane.

6. The apparatus of any of claims 1-5, wherein the plurality of transmitting units (36) are disposed in a same height on the projection part (30).

7. The apparatus of any of claims 1-5, wherein at least a portion of the plurality of transmitting units (136a-e) are disposed in a different height to one another or the rest on the projection part (130).

8. The apparatus of any of claims 1 - 7, wherein the plurality of transmitting units (36, 136a-e) are disposed over the plurality of docking terminals.

9. The apparatus of any of claims 1 - 8, wherein each one of the plurality of transmitting units (36, 136a-e) comprises an infrared lamp.

10. The apparatus of any of claims 1 - 9, wherein the docking object (10) comprises a charging device, and wherein the plurality of docking terminals (20) comprises charging terminals.

11. The apparatus of any of claims 1 - 10, further comprising a sensing tape (15) disposed in a straight line on a bottom in front of the plurality of docking terminals (20).

12. An apparatus for inducing an automatic docking of a robot (40, 42, 46) having connecting terminals and a receiving unit, comprising:
a docking object (10) having docking terminals (20) disposed on a surface, the docking terminals (20) being configured for electrical communication with the connecting terminals of the robot (40, 42, 46) when the robot (40, 42, 46) is docked with the docking object (10); and
a plurality of transmitting units (36, 136a-e) disposed on the surface, each transmitting unit (36, 136a-e) of the plurality of transmitting units (36, 136a-e) transmitting a signal in a different direction for receipt by the receiving unit of the robot (40, 42, 46) to induce the automatic docking.

13. The apparatus of claim 12, further comprising a projecting part (30, 130) formed on the surface, the plurality of transmitting units (36, 136a-e) being disposed on the projecting part (30, 130).

14. The apparatus of claim 13, wherein the projecting part (30, 130) comprises a rounded surface.

15. The apparatus of claim 13, wherein the projecting part (30, 130) comprises a semi-oval sphere.

16. The apparatus of any of claims 12-15, wherein the plurality of transmitting units (36, 136a-e) are disposed to cover an angle of at least 180° on a plane.

17. The apparatus of any of claims 12-16, wherein the plurality of transmitting units (36) are disposed at a common height.

18. The apparatus of any of claims 12 - 16, wherein at least a portion of the plurality of transmitting units (136a-e) are disposed at a different height.

19. The apparatus of any of claims 12-18, further comprising a power cord in electrical communication with the docking terminals (20), the power cord being connectable with a power source.
